# EUROPÄISCHE PATENTSCHRIFT

(11) **EP 3 762 222 B1**
(45) Veröffentlichungstag und Bekanntmachung des Hinweises auf die Patenterteilung: **07.07.2021**
(21) Anmeldenummer: 20704060.1
(22) Anmeldetag: 17.02.2020
(51) Int. Cl.: B29C 71/00, B29C 71/02, B29C 64/35

(54) **VERFAHREN ZUR OBERFLÄCHENBEARBEITUNG VON POLYMEREN DREIDIMENSIONALEN OBJEKTEN**
METHOD FOR SURFACE TREATMENT OF POLYMERS OF THREE-DIMENSIONAL OBJECTS
PROCÉDÉ D'USINAGE DE SURFACE D'OBJETS TRIDIMENSIONNELS EN POLYMÈRE

(30) Priorität: 21.02.2019 EP 19158560
(43) Veröffentlichungstag der Anmeldung: 13.01.2021
(73) Patentinhaber: Evonik Operations GmbH, 45128 Essen (DE)
(72) Erfinder: GREBE, Maik, 44805 Bochum (DE); DIEKMANN, Wolfgang, 45731 Waltrop (DE); DOMINGUES BAPTISTA, Andreas, 40468 Düsseldorf (DE)
(74) Vertreter: Evonik Patent Association
(86) Internationale Anmeldenummer: PCT/EP2020/054105
(87) Internationale Veröffentlichungsnummer: WO 2020/169532

(56) Entgegenhaltungen:
- EP-A1- 1 419 870
- DE-A1-102009 047 237
- US-A1- 2013 075 957
- US-A1- 2017 327 658
- US-B1- 7 114 943

## Beschreibung

Die vorliegende Erfindung betrifft die Oberflächenbearbeitung von dreidimensionalen Objekten, welche in Additive Manufacturing-Verfahren aus mindestens einem Polymer hergestellt wurden. Weiterhin betrifft die Erfindung Formkörper, welche nach dem Verfahren behandelt wurden. Die zügige Bereitstellung von Prototypen oder Kleinserien ist eine in der jüngsten Zeit häufig gestellte Aufgabe. Verfahren, die es ermöglichen, dreidimensionale Objekte schnell herzustellen, werden Rapid Prototyping, Rapid Manufacturing, Additive Fabrication-Verfahren oder 3D Printing genannt. In der ISO/ASTM 52900 werden diese Verfahren unter Additive Manufacturing zusammengefasst.

Verfahren, bei denen schichtweise ein Strang abgelegt wird, um ein dreidimensionales Objekt herzustellen, werden unter dem Begriff Material Extrusion zusammengefasst. Ein Beispiel für Material Extrusion ist das Fused Deposition Modelling (FDM). In US 5121329 ist dieses Verfahren ausführlich beschrieben.

Besonders geeignet sind Verfahren, bei denen schichtweise durch selektives Aufschmelzen und/oder Verfestigen von pulverförmigen Werkstoffen die gewünschten Strukturen hergestellt werden. Die nach diesem Prinzip arbeitenden Verfahren werden unter dem Oberbegriff Powder Bed Fusion zusammengefasst. Die Powder Bed Fusion-Technologie umfasst unter anderem Selective Heat Sintering (SHS), selektive Lasersintern (SLS), Selective Absorbing Sintering (SAS) und Selective Inhibition Sintering (SIS). Das Laser-Sintern wird ausführlich in den Schriften US 6136948 und WO 9606881 beschrieben. Weitere Beispiele für Powder Bed Fusion-Verfahren sind in den Patentschriften US 6531086 und EP 1740367 (US 2007/238056) erwähnt. In der DE 19747309 (US 6245281) ist ein Pulver offenbart, welches gut für eine Anwendung im Powder Bed Fusion-Verfahren geeignet ist.

Ein Nachteil der oben genannten Verfahren ist, dass die mit diesen Verfahren hergestellten Objekte keine einheitliche, glatte Oberfläche vorweisen. In vielen Anwendungsfällen ist eine glatte Oberfläche der Objekte aus ästhetischen oder technischen Gründen wünschenswert oder gar erforderlich, so dass Objekte, die mittels der oben genannten Verfahren hergestellt werden, nicht eingesetzt werden können.

Es gibt verschiedene Oberflächenbearbeitungsverfahren, um die Oberflächen glatter (d.h. mit geringerer Rauheit) zu gestalten. Ein gängiges, einfaches mechanisches Verfahren zur Oberflächenbearbeitung ist das Strahlen mit Strahlgut wie zum Beispiel Sand oder Glaskugeln. Die Oberflächen werden mit diesem Verfahren aber nur unzureichend geglättet. Ein weiteres mechanisches Verfahren ist das Gleitschleifen oder auch Trowalisieren. Mit diesem Verfahren können glatte Oberflächen erzielt werden, aber innen liegende Ecken werden schlecht und exponiert liegende Ecken werden übermäßig bearbeitet. Zudem besteht bei diesem Verfahren die Gefahr, dass filigrane Bauteile beschädigt werden.

In US 2005/0173838 werden mittels eines dampfförmigen Lösemittels die Oberflächen eines dreidimensionalen Objektes geglättet. Hier wird zwar eine Glättung an allen Stellen eines dreidimensionalen Objekts erzielt, aber es ist ein Lösemittel erforderlich, welches das Polymermaterial löst. Lösemittel, welche die gängigsten Polymere lösen, sind aber ätzend oder zumindest gesundheits-und umweltgefährdend. Bei organischen Dämpfen besteht zudem eine hohe Explosionsgefahr.

In US 2017/327658 A1 wird ein Verfahren zur Oberflächenbearbeitung beschrieben. Dabei wird ein Objekt in konzentrierte Säure gegeben und anschließend erhitzt.

DE 102009047237 A1 beschreibt eine Vorrichtung zum Herauslösen von Stützmaterial in dreidimensional gedruckten Modellen. Diese Vorrichtung umfasst mehrere Becken, um die Spülung der Modelle zu ermöglichen.

Aufgabe der vorliegenden Erfindung war es daher, ein einfaches und kostengünstiges Oberflächenbearbeitungsverfahren bereit zu stellen, welches die Oberflächen eines dreidimensionalen Objektes glättet bzw. die Rauigkeit der Oberfläche reduziert. Die geglättete Oberfläche sollte möglichst gleichmäßig sein. Das Verfahren sollte dabei ohne giftige oder gesundheitsgefährdende Stoffe auskommen. Zudem sollte die Reißdehnung der Objekte erhöht werden.

Überraschend wurde die Aufgabe durch ein Verfahren gelöst, bei dem die Oberfläche eines dreidimensionalen Objekts, welches in Additive Manufacturing-Verfahren aus mindestens einem Polymer hergestellt wurde, bearbeitet wird. Das erfindungsgemäße Verfahren umfasst die Schritte:
a) Eintauchen des dreidimensionalen Objekts in ein Stoffgemisch A,
b) Verweilen des dreidimensionalen Objekts in dem Stoffgemisch A,
c) Herausnahme des dreidimensionalen Objekts aus dem Stoffgemisch A,
d) Eintauchen des dreidimensionalen Objekts in ein Stoffgemisch B,
e) Verweilen des dreidimensionalen Objekts in dem Stoffgemisch B und
f) Herausnahme des dreidimensionalen Objekts aus dem Stoffgemisch B,

Das Stoffgemisch A weist eine Temperatur auf, die über dem Schmelzpunkt des Polymers liegt. Diese Temperatur wird Prozesstemperatur A genannt. Das Stoffgemisch B weist eine Temperatur auf, die unter dem Schmelzpunkt des Polymers liegt. Dies entspricht der Prozesstemperatur B. Sofern mehrere Polymere bei der Herstellung eines dreidimensionalen Objekts eingesetzt wurden, gelten die zuvor und auch die nachfolgenden Bedingungen für das Gemisch an Polymeren, sofern nicht etwas anderes angegeben ist.

Das erfindungsgemäße Verfahren ermöglicht es, Formkörper mit geringerer Rauigkeit bzw. erhöhter und gleichmäßiger Oberflächenglätte bereitzustellen. Zudem zeigen die Formkörper eine erhöhte Reißdehnung auf.

Das Objekt aus dem Additive Manufacturing-Verfahren wird Norm-gemäß schichtweise hergestellt.

In dieser Anmeldung umfasst das Stoffgemisch auch den Sonderfall, dass das Stoffgemisch A bzw. B aus einem einzigen Stoff besteht.

In einer bevorzugten Ausführung des Verfahrens wird das dreidimensionale Objekt vor dem Schritt a) auf eine Temperatur von unter 0 °C temperiert. Besonders bevorzugt ist eine Temperierung von unter -20 °C, besonders bevorzugt von unter -40 °C. Die Kühlbedingungen sind so zu wählen, dass sichergestellt ist, dass das komplette dreidimensionale Objekt die gewünschte Temperatur vorweist.

Bevorzugte Stoffe des Stoffgemischs A weisen eine molekulare Masse von mindestens 150 g/mol auf. Beispiele für derartige Verbindungen sind ausgewählt aus Alkanen, Arenen, Alkoholen einschließlich mehrwertiger Alkohole wie Glykole, Siloxanen, Sulfoxiden und Alkenen.

Das Stoffgemisch A enthält vorzugsweise mindestens 50 Massen-%, bezogen auf die Gesamtmasse an Stoffgemisch A, eines Stoffes, der bei der Prozesstemperatur A flüssig ist. Bevorzugt sind mindestens 70 Massen-% an flüssigen Stoffen enthalten, besonders bevorzugt mindestens 90 Massen-%. Die restlichen Anteile des Stoffgemisches liegen bei der Prozesstemperatur A in fester Form vor.

Die bei der Prozesstemperatur A flüssigen Stoffe des Stoffgemisches A können untereinander mischbar (Bildung einer einzigen homogenen Phase) oder auch untereinander nicht mischbar (Bildung mehrerer Phasen) sein.

Bevorzugt ist der mindestens eine flüssige Stoff des Stoffgemisches A nicht mischbar mit ggf. vorhandenen weiteren flüssigen Komponenten des Stoffgemisches A. Dabei soll der eine flüssige Stoff eine gute Verträglichkeit oder Kompatibilität mit dem Polymermaterial des dreidimensionalen Objekts aufweisen, d.h. die Differenz der Oberflächenspannung zwischen Polymer und flüssigem Stoff beträgt maximal 10 mN/m, vorzugsweise maximal 5 mN/m. Ganz besonders bevorzugt entspricht der mindestens eine flüssige Stoff dem Polymer oder Polymergemisch des dreidimensionalen Objekts.

Die weiteren flüssigen Komponenten sind vorzugsweise derart ausgewählt, dass sie den polymeren Werkstoff des dreidimensionalen Objekts nach CRC Handbook of Chemistry and Physics, 94th Edition, nicht oder schlecht lösen (d.h. die Löslichkeit des Polymers ist bei 23 °C kleiner 10 g/L).

Als Maß für die Verträglichkeit und/oder Kompatibilität zwischen flüssigem Stoff und dem Polymer des dreidimensionalen Objekts kann die Differenz der jeweiligen Oberflächenspannung herangezogen werden (gemessen nach Pendant Drop Methode, ermittelt mittels Oberflächenspannungsmessgerät OCA 20 der Firma Data Physics bei der Prozesstemperatur A des erfindungsgemäßen Verfahrens).

Der mindestens eine flüssige Stoff kann Additive enthalten, die an der Oberfläche des dreidimensionalen Objekts einen oder mehrere zusätzliche Effekte hervorrufen können, wie zum Beispiel Farbe/ Farbeffekte, elektrische Leitfähigkeit, Härte, Flammschutz, Chemikalien-/ Witterungsbeständigkeit, Reibungseigenschaften oder Haptik.

Das Verfahren wird in der Reihenfolge a bis f durchgeführt, wobei die Verfahrensschritte a bis c bzw. d bis f mehrfach durchgeführt werden können. Dadurch können mehrere Schichten flüssigen Stoffs an Stoffgemisch aufgetragen bzw. die Oberfläche mehrfach behandelt werden. Darüber hinaus kann das Objekt in verschiedene Stoffgemische A eingetaucht werden, so dass Schichten mit jeweils unterschiedlichen Eigenschaften auf dem dreidimensionalen Objekt aufgetragen werden können.

In einer bevorzugten Ausführungsform des Verfahrens erfolgt nach Auftrag von Stoffgemisch A kein Erhitzen der Oberfläche des Formkörpers über 120 °C. Ebenso ist es bevorzugt, dass nach Auftrag von Stoffgemisch B kein Erhitzen der Oberfläche des Formkörpers über 120 °C vorgenommen wird. Besonders bevorzugt erfolgt nach Auftrag der Stoffgemische kein Erhitzen der Oberfläche. Alternativ kann die Oberfläche gekühlt werden.

Die Temperatur des Stoffgemisches A wird in Abhängigkeit vom Polymer des dreidimensionalen Objekts gewählt. Für Materialien mit mehreren Schmelzpunkten ist der Hauptschmelzpunkt für die Temperatur des Stoffgemisches A maßgebend. Der Hauptschmelzpunkt ist der höchste Peak in der DSC-Kurve, also die Temperatur, bei dem die höchste Energie benötigt wird, um die Temperatur weiter zu erhöhen.

Bei dem erfindungsgemäßen Verfahren wird für das Stoffgemisches A eine Temperatur gewählt, welche über dem Schmelzpunkt des Polymers liegt. Bevorzugt liegt die Temperatur des Stoffgemisches A mindestens 10 °C über dem Schmelzpunkt des Polymers, besonders bevorzugt mindestens 20 °C und ganz besonders bevorzugt mindestens 30 °C über dem Schmelzpunkt des Polymers.

Der Siedepunkt des Stoffgemisches A sollte dabei vorzugsweise mindestens 20 °C über dem Schmelzpunkt des Polymers liegen, bevorzugt mindestens 30 °C und ganz besonders bevorzugt mindestens 40 °C.

Bevorzugt wird ein Stoffgemische A gewählt, dessen Dichte nicht mehr als 25 % von der Dichte des Polymers des dreidimensionalen Objekts abweicht (Dichte jeweils bei 23 °C). Besonders bevorzugt wird ein Stoffgemisch A gewählt, dessen Dichte nicht mehr als 15 % und ganz besonders bevorzugt nicht mehr als 5 % abweicht.

Bei dem erfindungsgemäßen Verfahren wird das dreidimensionale Objekt vorzugsweise für maximal 60 s in das Stoffgemisch A bzw. B eingetaucht, bevorzugt für maximal 40 s, besonders bevorzugt für maximal 20 s und ganz besonders bevorzugt für maximal 10 s. Sofern die Schritte mehrfach durchgeführt werden sollten, beziehen sich die zeitlichen Angaben jeweils auf die einzelnen, zu wiederholenden Schritte. Die Zeitspanne zwischen dem Herausnehmen aus A und dem Eintauchen in B sollte möglichst kurz ausfallen. Beispielsweise beträgt die Zeitspanne 1 s bis 30 s, vorzugsweise 2 s bis 10 s.

Bei dem erfindungsgemäßen Verfahren wird eine Temperatur für das Stoffgemisch B gewählt, welche unter dem Schmelzpunkt des dreidimensionalen Objekts liegt. Bevorzugt liegt die Temperatur des Stoffgemisches B mindestens 20 °C unter dem Schmelzpunkt dreidimensionalen Objekts, besonders bevorzugt mindestens 40 °C und ganz besonders bevorzugt mindestens 80 °C unter dem Schmelzpunkt dreidimensionalen Objekts.

Es ist bevorzugt, dass das Stoffgemisch B bei der Prozesstemperatur B flüssig ist.

Bevorzugt wird ein Stoffgemisch B gewählt, bei dem die einzelnen Komponenten des Gemischs den polymeren Werkstoff des dreidimensionalen Objekts nach CRC Handbook of Chemistry and Physics, 94th Edition, nicht oder schlecht löst (d.h. die Löslichkeit des Polymers ist bei 23 °C kleiner 10 g/L). Die Komponenten sollten gegenüber dem Polymer chemisch inert sein. Zudem sollten sie eine relativ hohe spezifische Wärmekapazität aufweisen, d.h. sie sollte mindestens 2 kJ/(kg·K), vorzugsweise mindestens 3 kJ/(kg·K) und bevorzugt mindestens 4 kJ/(kg·K) aufweisen. Geeignete Stoffgemische B sind beispielsweise Öle oder Wasser, wobei Wasser bevorzugt ist.

Durch die Behandlung mit den Stoffgemischen A und B wird ein Formkörper erhalten, der vorzugsweise eine pH-neutrale Oberfläche aufweist. Insofern wählt der Fachmann die Stoffgemische A und B entsprechend aus. Hierbei sollte Stoffgemisch B idealerweise neutral oder (bei saurem Stoffgemisch A) alkalisch bzw. (bei alkalischem Stoffgemisch B) sauer sein.

Alle angegeben Schmelz-/ Siedetemperaturen beziehen sich auf Werte bei Normaldruck, welche mittels DSC (DIN 53765, DSC 7 von Perkin Elmer Heiz-/Kühlrate 20K/min) gemessen worden sind.

Geeignete Polymere für die Herstellung dreidimensionaler Objekte sind beispielsweise ausgewählt aus Polyamiden, Polyaryletherketone wie Polyetheretherketon, Polyolefine wie Polyethylen oder Polyproylen, Polyesteramiden, Polylactiden und Acrylnitril-Butadien-Styrol-Copolymeren. Bevorzugt sind Polyamide. Bevorzugte Polyamide sind beispielsweise Polyamid 11, Polyamid 12 oder Polyamid 6.13.

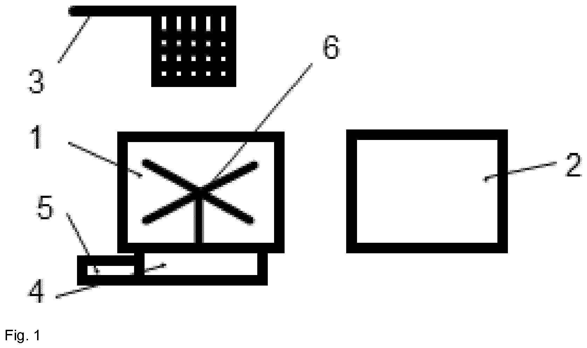

Weiterhin beschrieben wird eine Vorrichtung, bei dem die Oberfläche eines dreidimensionalen Objekts durch das erfindungsgemäße Verfahren geglättet wird. Die Vorrichtung ist in Fig. 1 dargestellt. Die Vorrichtung umfasst mindestens einen Behälter A (1), welcher für die Aufnahme des Stoffgemischs A geeignet ist, und einen Behälter B (2), der für die Aufnahme des Stoffgemischs B geeignet ist. Ein weiterer Bestandteil der Vorrichtung ist ein Heizkörper (4), welcher das Stoffgemisch in Behälter A (1) erwärmen kann. Bevorzugt verfügt die Vorrichtung über eine Regelung (5), um die Temperatur des Behälters A (1) einstellen zu können. Der Behälter A (1) verfügt vorzugsweise über eine Rührvorrichtung (6) zur Einbringung von Scherung in ein Stoffgemisch. Optionaler Bestandteil der erfindungsgemäßen Vorrichtung ist ein gitterförmiges Behältnis (3), mit dem die dreidimensionalen Objekte in die jeweiligen Flüssigkeiten in den Behältern A (1) und Behälter B (2) eingetaucht und wieder herausgenommen werden können.

Die Vorrichtung wird in einer kontinuierlichen Variante ausgeführt. In dieser Variante werden die dreidimensionalen Objekte mittels eines Transportbandes in Behälter A und von dort in Behälter B verbracht.

Formkörper aus einem Additive Manufacturing-Verfahren, die aus erfindungsgemäßen Verfahren erhalten werden, sind ein weiterer Gegenstand der Erfindung. In einer Ausführungsform der Erfindung wurde die Oberfläche des Formkörpers nach Auftrag von Stoffgemisch A und/oder Stoffgemisch B nicht über 120 °C erhitzt. In einer weiteren Ausführungsform weist der Formkörper eine pH-neutrale Oberfläche auf. Der Formkörper enthält vorzugsweise Polymere, die ausgewählt sind aus Polyamiden, Polyaryletherketone wie Polyetheretherketon, Polyolefine wie Polyethylen oder Polyproylen, Polyesteramiden, Polylactiden, Acrylnitril-Butadien-Styrol-Copolymeren und Mischungen davon. Bevorzugt sind Polyamide. Bevorzugte Polyamide sind beispielsweise Polyamid 11, Polyamid 12 oder Polyamid 6.13.

### Beispiele

### Beispiel 1: SLS-Bauteil PA12 sandgestrahlt (nicht erfindungsgemäß)

Ein mittels SLS hergestellter Prüfkörper (gemäß DIN EN ISO 527-1 und UL94) aus Polyamid 12 (EOSINT PA2200) wird mittels Glaskugelstrahlen von Pulverresten befreit.

### Beispiel 2: SLS-Bauteil PEA sandgestrahlt (nicht erfindungsgemäß)

Ein mittels SLS hergestellter Prüfkörper (gemäß DIN EN ISO 527-1 und UL94) aus Polyesteramid PEA (EOSINT Primepart ST) wird mittels Glaskugelstrahlen von Pulverresten befreit.

### Beispiel 3: SLS-Bauteil PA613 sandgestrahlt (nicht erfindungsgemäß)

Ein mittels SLS hergestellter Prüfkörper (gemäß DIN EN ISO 527-1 und UL94) aus PA613-Fällpulver wird mittels Glaskugelstrahlen von Pulverresten befreit.

### Beispiel 4: FDM-Bauteil unbehandelt (nicht erfindungsgemäß)

Ein mittels FDM hergestellter Prüfkörper (gemäß DIN EN ISO 527-1 und UL94) aus Acrylnitril-Butadien-Styrol ABS wird von den Stützgeometrien befreit und abgewaschen.

### Beispiel 5: FDM-Bauteil unbehandelt (nicht erfindungsgemäß)

Ein mittels FDM hergestellter Prüfkörper (gemäß DIN EN ISO 527-1 und UL94) aus Polylactid PLA wird von den Stützgeometrien befreit und abgewaschen.

### Beispiel 6: SLS-Bauteil PA12 Oberflächenbehandelt bei 200 °C (erfindungsgemäß)

Ein Prüfkörper hergestellt und nachbearbeitet wie in Beispiel 1 wird zusätzlich in einem Ölbad (MARLOTHERM N) bei 205 °C für 20s eingetaucht. Danach wird der Prüfkörper herausgenommen und in einem Wasserbad (25 °C) für 10s eingetaucht.

### Beispiel 7: SLS-Bauteil Oberflächenbehandelt bei 170 °C (erfindungsgemäß)

Ein Prüfkörper hergestellt und nachbearbeitet wie in Beispiel 2 wird zusätzlich in einem Glycerin Bad bei 170 °C für 20s eingetaucht. Danach wird der Prüfkörper herausgenommen und in einem Wasserbad (25 °C) für 10s eingetaucht.

### Beispiel 8: SLS-Bauteil Oberflächenbehandelt bei 230 °C (erfindungsgemäß)

Ein Prüfkörper hergestellt und nachbearbeitet wie in Beispiel 3 wird zusätzlich in einem Ölbad (MARLOTHERM N) bei 240 °C für 10s eingetaucht. Danach wird der Prüfkörper herausgenommen und in einem Wasserbad (25 °C) für 10s eingetaucht.

### Beispiel 9: FDM-Bauteil Oberflächenbehandelt bei 120 °C (erfindungsgemäß)

Ein Prüfkörper hergestellt und nachbearbeitet wie in Beispiel 4 wird zusätzlich in einem Bad aus 1,2-Propandiol bei 150 °C für 20s eingetaucht. Danach wird der Prüfkörper herausgenommen und in einem Wasserbad (25 °C) für 10s eingetaucht.

### Beispiel 10: FDM-Bauteil Oberflächenbehandelt bei 160 °C (erfindungsgemäß)

Ein Prüfkörper hergestellt und nachbearbeitet wie in Beispiel 5 wird zusätzlich in einem Ölbad Ethylenglycol bei 180 °C für 20s eingetaucht. Danach wird der Prüfkörper herausgenommen und in einem Wasserbad (25 °C) für 10s eingetaucht.

### Beispiel 11: SLS-Bauteil PA12 Oberflächenbehandelt bei 200 °C (erfindungsgemäß)

Ein Prüfkörper hergestellt und nachbearbeitet wie in Beispiel 1 wird in einer Kühlkammer 4h auf -30 °C temperiert. Danach wird der Prüfkörper zusätzlich in ein Stoffgemisch bei 200 °C für 20s eingetaucht. Das Stoffgemisch besteht zu 80 Masseprozent aus einem Wärmeträgeröl (MARLOTHERM N) und zu 20 % aus einem Polyamid 12 (VESTAMID L1723 blk sw). Das Stoffgemisch wird mittels eines Rührers ständig durchmischt. Danach wird der Prüfkörper herausgenommen und in einem Wasserbad (25 °C) für 10s eingetaucht.

### Beispiel 12: SLS-Bauteil PA12 Oberflächenbehandelt bei 190 °C (erfindungsgemäß)

Ein Prüfkörper/UL-Prüfkörper hergestellt und nachbearbeitet wie in Beispiel 1 wird in einer Kühlkammer 16h auf -60 °C temperiert. Danach wird der Zugprüfkörper/UL Prüfkörper zusätzlich in ein Stoffgemisch bei 190 °C für 40s eingetaucht. Das Stoffgemisch besteht zu 80 Masseprozent aus einem Wärmeträgeröl (MARLOTHERM N) und zu 20% aus einem Polyamid 12 (VESTAMID X7166 nc). Das Stoffgemisch wird mittels eines Rührers ständig durchmischt. Danach wird der Prüfkörper herausgenommen und in einem Wasserbad (25 °C) für 10s eingetaucht.

**Tabelle1: Ergebnisse der Prüfkörper-Prüfungen**

| Beispiel | E-Modul [MPa] | Zugfestigkeit [MPa] | Reißdehnung [%] | Rauigkeit Sa [µm] | Bemerkung |
|---|---|---|---|---|---|
| 1 | 1750 | 49 | 18 | 42 | Bauteil weiß, UL94 3,2mm HB |
| 2 | 183 | 9 | 216 | 63 | |
| 3 | 2242 | 58 | 26 | 44 | |
| 4 | 2136 | 56 | 3 | 382 | |
| 5 | 3127 | 51 | 5 | 128 | |
| 6* | 1714 | 48 | 57 | 22 | |
| 7* | 184 | 10 | 384 | 28 | |
| 8* | 2231 | 59 | 64 | 24 | |
| 9* | 2120 | 55 | 5 | 298 | |
| 10* | 3133 | 52 | 5 | 92 | |
| 11* | 1713 | 48 | 42 | 16 | Bauteil schwarz |
| 12* | 1694 | 47 | 33 | 15 | UL94 3,2mm V2 |

| | | | | | |
|---|---|---|---|---|---|
| *erfindungsgemäß | | | | | |

Die Prüfkörper wurden nach DIN EN ISO 527-1 und UL94 geprüft. Als Maß für die Rauigkeit wurde die mittlere arithmetische Höhe (Sa) herangezogen. Die Sa wurde mittels eines Keyence Mikroskops VHX6000 an der Unterseite der Prüfkörper ermittelt. Die Ergebnisse der Beispielsversuche sind der Tabelle 1 zu entnehmen. Es ist zu erkennen, dass die Rauigkeit der dreidimensionalen Objekte durch das erfindungsgemäße Verfahren deutlich reduziert werden konnte. Die Reißdehnung der dreidimensionalen Objekte in den erfindungsgemäßen Beispielen wurde deutlich erhöht, während die anderen mechanischen Kennwerte auf gleichem Niveau gehalten werden konnten. Im Beispiel 11 wurde zudem eine schwarze Oberfläche erzielt. In Beispiel 12 wurde eine flammhemmende Wirkung erzielt.

Mit dem erfindungsgemäßen Verfahren konnte somit eine geringere Oberflächenrauigkeit der dreidimensionalen Objekte erzielt werden. Darüber hinaus konnten zusätzliche Effekte wie Farbe oder Flammschutz durch das erfindungsgemäße Verfahren erzielt werden.

## Patentansprüche

1. Verfahren zur Oberflächenbearbeitung von dreidimensionalen Objekten, welche in Additive Manufacturing-Verfahren aus mindestens einem Polymer hergestellt wurden, umfassend die folgenden Schritte:
a) Eintauchen des dreidimensionalen Objekts in ein Stoffgemisch A,
b) Verweilen des dreidimensionalen Objekts in dem Stoffgemisch A,
c) Herausnahme des dreidimensionalen Objekts aus dem Stoffgemisch A,
d) Eintauchen des dreidimensionalen Objekts in ein Stoffgemisch B,
e) Verweilen des dreidimensionalen Objekts in dem Stoffgemisch B und
f) Herausnahme des dreidimensionalen Objekts aus dem Stoffgemisch B,
**dadurch gekennzeichnet, dass** das Stoffgemisch A eine Temperatur (Prozesstemperatur A) aufweist, die über dem Schmelzpunkt des Polymers liegt, und dass das Stoffgemisch B eine Temperatur (Prozesstemperatur B) aufweist, die unter dem Schmelzpunkt des Polymers liegt.

2. Verfahren nach Anspruch 1, **dadurch gekennzeichnet, dass** das Stoffgemisch A mindestens 50 Massen-%, bezogen auf die Gesamtmasse an Stoffgemisch A, mindestens eines Stoffes enthält, der bei Prozesstemperatur A flüssig sind.

3. Verfahren nach einem der vorherigen Ansprüche, **dadurch gekennzeichnet, dass** die Dichte des Stoffgemisches A nicht mehr als 25 % von der Dichte des Polymers des dreidimensionalen Objekts abweicht.

4. Verfahren nach Anspruch 2, **dadurch gekennzeichnet, dass** der mindestens eine flüssige Stoff mit den weiteren flüssigen Komponenten des Stoffgemisches nicht mischbar ist, wobei die Differenz der Oberflächenspannung zwischen Polymer und flüssigem Stoff maximal 10 mN/m beträgt.

5. Verfahren nach Anspruch 2, **dadurch gekennzeichnet, dass** der mindestens eine flüssige Stoff mindestens einem Polymer des dreidimensionalen Objekts entspricht.

6. Verfahren nach einem der vorherigen Ansprüche, **dadurch gekennzeichnet, dass** die Schritte a bis f mehrfach durchgeführt werden.

7. Verfahren nach einem der vorherigen Ansprüche **dadurch gekennzeichnet, dass** die dreidimensionalen Objekte vor dem Schritt a auf eine Temperatur von unter 0 °C temperiert werden.

8. Verfahren nach einem der vorherigen Ansprüche **dadurch gekennzeichnet, dass** das Stoffgemisch B eine Temperatur aufweist, die mindestens 20 °C unterhalb des Schmelzpunkts des Polymers liegt.

9. Verfahren nach einem der vorherigen Ansprüche **dadurch gekennzeichnet, dass** das Stoffgemisch B bei der Prozesstemperatur B flüssig ist.

10. Verfahren nach einem der vorherigen Ansprüche **dadurch gekennzeichnet, dass** das Stoffgemisch B Stoffe enthält, in dem das Polymer eine Löslichkeit von weniger als 10 g/L aufweist.

11. Formkörper aus einem Additive Manufacturing-Verfahren, die mittels eines Verfahrens nach einem der Ansprüche 1 bis 10 behandelt wurden, wobei nach Schritt f) kein Erhitzen der Oberfläche im Temperaturbereich von über 120 °C erfolgt.

12. Formkörper aus einem Additive Manufacturing-Verfahren, die mittels eines Verfahrens nach einem der Ansprüche 1 bis 10 behandelt wurden und eine pH-neutrale Oberfläche auweisen.

13. Formkörper gemäß Anspruch 11 oder 12, **dadurch gekennzeichnet, dass** dieser ein Polymer enthält, das ausgewählt ist aus Polyamiden, Polyaryletherketone, Polyolefine, Polyesteramiden, Polylactiden, Acrylnitril-Butadien-Styrol-Copolymeren und Mischungen davon.

## Claims

1. Process for the surface treatment of three-dimensional objects which have been produced in additive manufacturing processes from at least one polymer, the process comprising the following steps:
a) immersing the three-dimensional object in a substance mixture A,
b) leaving the three-dimensional object in the substance mixture A for a time,
c) removing the three-dimensional object from the substance mixture A,
d) immersing the three-dimensional object in a substance mixture B,
e) leaving the three-dimensional object in the substance mixture B for a time and
f) removing the three-dimensional object from the substance mixture B,
**characterized in that** the substance mixture A has a temperature (process temperature A) which is above the melting point of the polymer, and **in that** the substance mixture B has a temperature (process temperature B) which is below the melting point of the polymer.

2. Process according to Claim 1, **characterized in that** the substance mixture A contains at least 50 mass%, based on the total mass of substance mixture A, of at least one substance which is liquid at process temperature A.

3. Process according to either of the preceding claims, **characterized in that** the density of the substance mixture A differs by not more than 25% from the density of the polymer of the three-dimensional object.

4. Process according to Claim 2, **characterized in that** the at least one liquid substance is immiscible with the further liquid components of the substance mixture, with the difference in surface tension between polymer and liquid substance being at most 10 mN/m.

5. Process according to Claim 2, **characterized in that** the at least one liquid substance corresponds to at least one polymer of the three-dimensional object.

6. Process according to any of the preceding claims, **characterized in that** steps a to f are conducted more than once.

7. Process according to any of the preceding claims, **characterized in that** the temperature of the three-dimensional objects is adjusted prior to step a to a temperature of below 0°C.

8. Process according to any of the preceding claims, **characterized in that** the substance mixture B has a temperature which is at least 20°C below the melting point of the polymer.

9. Process according to any of the preceding claims, **characterized in that** the substance mixture B is liquid at the process temperature B.

10. Process according to any of the preceding claims, **characterized in that** the substance mixture B contains substances in which the polymer has a solubility of less than 10 g/l.

11. Shaped bodies from an additive manufacturing process which have been treated by means of a process according to any of Claims 1 to 10, wherein after step f) no heating of the surface in the temperature range of above 120°C is effected.

12. Shaped bodies from an additive manufacturing process which have been treated by means of a process according to any of Claims 1 to 10 and have a pH-neutral surface.

13. Shaped body according to Claim 11 or 12, **characterized in that** it contains a polymer selected from polyamides, polyaryl ether ketones, polyolefins, polyesteramides, polylactides, acrylonitrile-butadiene-styrene copolymers and mixtures thereof.

## Revendications

1. Procédé pour l'usinage de surface d'objets tridimensionnels qui ont été fabriqués par un procédé de fabrication additive à partir d'au moins un polymère, comprenant les étapes suivantes :
a) immersion de l'objet tridimensionnel dans un mélange de substances A,
b) maintien de l'objet tridimensionnel dans le mélange de substances A,
c) extraction de l'objet tridimensionnel à partir du mélange de substances A,
d) immersion de l'objet tridimensionnel dans un mélange de substances B,
e) maintien de l'objet tridimensionnel dans le mélange de substances B, et
f) extraction de l'objet tridimensionnel à partir du mélange de substances B,
**caractérisé en ce que** le mélange de substances A présente une température (température de procédé A), qui est supérieure au point de fusion du polymère, et **en ce que** le mélange de substances B présente une température (température de procédé B) qui est inférieure au point de fusion du polymère.

2. Procédé selon la revendication 1, **caractérisé en ce que** le mélange de substances A contient au moins 50 % en masse, par rapport à la masse totale du mélange de substances A, d'au moins une substance qui est liquide à la température de procédé A.

3. Procédé selon l'une des revendications précédentes, **caractérisé en ce que** la masse volumique du mélange de substances A ne s'écarte pas de plus de 25 % de la masse moléculaire du polymère de l'objet tridimensionnel.

4. Procédé selon la revendication 2, **caractérisé en ce que** l'au moins une substance liquide n'est pas miscible aux autres composants liquides du mélange de substances, la différence de tension superficielle entre le polymère et la substance liquide étant au maximum de 10 mN/m.

5. Procédé selon la revendication 2, **caractérisé en ce que** l'au moins une substance liquide correspond au moins à un polymère de l'objet tridimensionnel.

6. Procédé selon l'une des revendications précédentes, **caractérisé en ce que** les étapes a à f sont mises en œuvre plusieurs fois.

7. Procédé selon l'une des revendications précédentes, **caractérisé en ce que** les objets tridimensionnels sont, avant l'étape a, portés à une température inférieure à 0 °C.

8. Procédé selon l'une des revendications précédentes, **caractérisé en ce que** le mélange de substances B présente une température qui d'au moins 20 °C inférieure au point de fusion du polymère.

9. Procédé selon l'une des revendications précédentes, **caractérisé en ce que** le mélange de substances B est liquide à la température de procédé B.

10. Procédé selon l'une des revendications précédentes, **caractérisé en ce que** le mélange de substances B contient des substances dans lesquelles le polymère présente une solubilité inférieure à 10 g/L.

11. Objets façonnés obtenus par un procédé de fabrication additive, qui ont été traités par un procédé selon l'une des revendications 1 à 10, aucun chauffage de la surface n'ayant lieu, après l'étape f), dans la plage de températures au-delà de 120 °C.

12. Objets façonnés obtenus par un procédé de fabrication additive, qui ont été traités par un procédé selon l'une des revendications 1 à 10, et présentent une surface à pH neutre.

13. Objet façonné selon la revendication 11 ou 12, **caractérisé en ce qu'**il contient un polymère qui est choisi parmi les polyamides, les polyaryléthercétones, les polyoléfines, les polyestéramides, les polylactides, les copolymères acrylonitrile-butadiène-styrène et les mélanges de ceux-ci.
